# EUROPÄISCHE PATENTSCHRIFT

(11) **EP 3 108 334 B1**
(45) Veröffentlichungstag und Bekanntmachung des Hinweises auf die Patenterteilung: **03.10.2018**
(21) Anmeldenummer: 15706377.7
(22) Anmeldetag: 20.02.2015
(51) Int. Cl.: G06F 3/01, G02B 27/01, B60K 35/00, B60K 37/06, G02B 27/00

(54) **SYSTEM MIT UND VERFAHREN ZUM AUTOMATISCHEN EIN-/UMSCHALTEN EINER EINSTELLVORRICHTUNG FÜR EINE HEAD-UP-DISPLAY-EINRICHTUNG**
SYSTEM HAVING AN ADJUSTMENT DEVICE AND METHOD FOR AUTOMATICALLY ADJUSTING/SWITCHING SAID ADJUSTMENT DEVICE FOR A HEAD-UP DISPLAY DEVICE
SYSTÈME ÉQUIPÉ D'UN DISPOSITIF DE RÉGLAGE D'UN ÉQUIPEMENT DE VISUALISATION TÊTE HAUTE ET PROCÉDÉ D'ACTIVATION/COMMUTATION AUTOMATIQUE DE CE DISPOSITIF

(30) Priorität: 22.02.2014 DE 102014002493
(43) Veröffentlichungstag der Anmeldung: 28.12.2016
(73) Patentinhaber: Audi AG, 85045 Ingolstadt (DE)
(72) Erfinder: BOUAZIZ, Tahar, 85055 Ingolstadt (DE)
(86) Internationale Anmeldenummer: PCT/EP2015/000384
(87) Internationale Veröffentlichungsnummer: WO 2015/124308

(56) Entgegenhaltungen:
- EP-A2- 1 123 842
- DE-A1-102005 009 397
- DE-A1-102012 006 966
- US-B1- 6 397 137

## Beschreibung

Die vorliegende Erfindung betrifft ein System mit und ein Verfahren zum automatischen Ein-/Umschalten einer Einstellvorrichtung für eine Head-up-Display-Einrichtng.
Die aus dem Stand der Technik bekannten Head-up-Displays stellen eine der zahlreichen Möglichkeiten dar, mit denen bspw. einem Fahrer eines (Kraft)Fahrzeugs für diesen relevante Informationen bspw. in Form von Text, Graphiken, virtuellen Bildern etc. angezeigt werden können.
Insbesondere aufgrund des vergleichsweise kleinen in (Kraft)Fahrzeugen zur Verfügung stehenden Bauraums für das Head-up-Display ist das Sichtfenster, das auch als "eye box" bzw. "head box" bezeichnet wird, innerhalb der die durch das Head-up-Display angezeigten Informationen für einen Nutzer sichtbar sind, relativ klein. Da sich die Augen- oder Kopfpositionen von möglichen Nutzern (Fahrern) bspw. aufgrund von unterschiedlicher Körpergröße, Einstellungen des Sitzes in horizontaler Richtung, Höhe der Sitzfläche und Steilheit der Rückenlehne deutlich voneinander unterscheiden können, kann es vorkommen, dass bei einem fest vorgegebenen Sichtfenster ("eye box" bzw. "head box") ein Nutzer die vom Head-up-Display zur Verfügung gestellten Informationen nicht sehen kann, da sich seine Augenposition außerhalb dieses Sichtfensters befindet.
Vor diesem Hintergrund sind Lösungen entwickelt worden, mit denen die horizontale und/oder vertikale Position einer Anzeige einer Head-up-Display-Einrichtung auf einer Projektionsfläche und damit auch die Position des Sichtfensters in einem Fahrzeug angepasst werden kann.
So beschreibt bspw. die DE 10 2005 009 397 A1 ein Kraftfahrzeug mit einem Head-up-Display, wobei die Bedieneinheit zur Bedienung des Head-up-Display in der Armlehne der Fahrertür des Kraftfahrzeugs angeordnet ist. Die Bedieneinheit kann ein Bedienelement zum vertikalen und horizontalen Einstellen des Sichtfensters des Head-up-Display aufweisen, wobei die Bedieneinheit als Drehschalter ausgebildet sein kann.

Die DE 10 2007 015 877 A1 hat eine Abbildungseinrichtung für ein virtuelles Bild in einem Fahrzeug zum Gegenstand, wobei eine Positionierung des virtuellen Bildes einstellbar ist, mit einer Schnittstelle zu einer Erfassungseinheit zur Erfassung einer räumlichen Einstellung wenigstens eines Fahrzeugteils und durch eine Recheneinheit zur Positionierung des virtuellen Bildes in Abhängigkeit von der räumlichen Einstellung des wenigstens einen Fahrzeugteils. Als eine räumliche Einstellung eines Fahrzeugteils kann etwa eine Einstellung eines Fahrersitzes, eines Spiegels des Fahrzeugs und/oder eine Höheneinstellung wenigstens eines Lenkrads berücksichtigt werden. Aus der Einstellung des wenigstens einen Fahrzeugteils kann eine Kopfposition ermittelt werden und eine Abbildung des virtuellen Bildes in Abhängigkeit von der gespeicherten Kopfposition erfolgen.

Aus der DE 10 2007 035 505 A1 ist ein Kraftfahrzeug mit einem Head-up-Display zum Anzeigen von Informationen bekannt, wobei die durch das Head-up-Display angezeigten Informationen aus einem Raumelement innerhalb des Kraftfahrzeuges sichtbar sind. Das Kraftfahrzeug weist weiter eine Verstelleinrichtung zum Verstellen der Position des Raumelements, eine Erfassungseinrichtung zum Erfassen der Position der Augen oder des Kopfes eines Fahrers des Kraftfahrzeuges und eine Steuereinrichtung auf, wobei die Steuereinrichtung derart eingerichtet und mit der Verstelleinrichtung und der Erfassungseinrichtung gekoppelt ist, dass die Position des Raumelements in Abhängigkeit von der erfassten Position der Augen oder des Kopfes eines Fahrers verstellt wird.

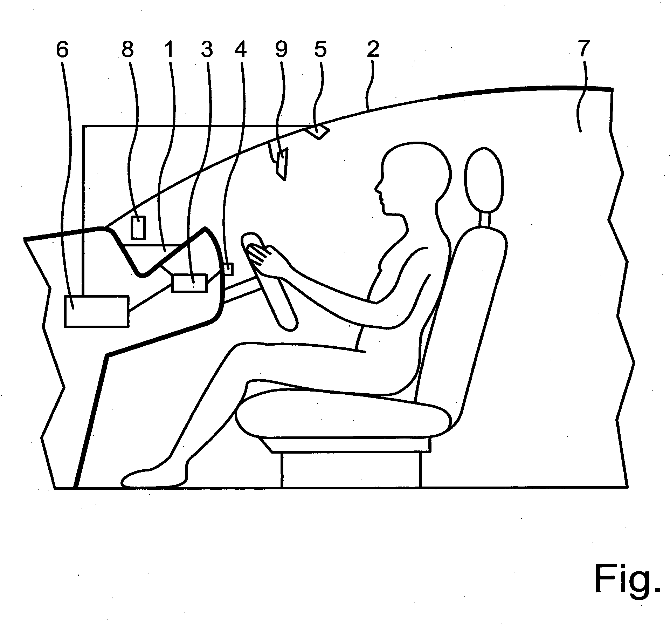

Und die DE 10 2008 023 225 A1 beschreibt ein Head-up-Display mit einer Bilderzeugungseinrichtung zur Erzeugung eines Bildes und mit einem optischen System zur Abbildung des Bildes, insbesondere auf eine Windschutzscheibe eines Fahrzeuges, mit einer Verstelleinrichtung zum Verstellen der Abbildungseinrichtung derart, dass die Höhe der Abbildung des Bildes geändert wird, und mit einer Steuereinrichtung, die derart eingerichtet ist, dass durch sie eine automatische Rotation der Bilderzeugungseinrichtung in Abhängigkeit von der Verstellung der Abbildungseinrichtung bewirkt wird. Hierdurch sollen Toleranzen beim Einbau des Head-up-Display, Toleranzen beim Einbau der Windschutzscheibe und/oder die Krümmungen der Windschutzscheibe ausgeglichen werden, die ein "Herunterhängen" eines darzustellenden Schriftzugs bei einer Höhenverstellung des erzeugten Bildes verursachen.

Die DE 10 2012 006966 A1 und die EP 1 123 842 A2 beschreiben die Möglichkeit, bestimmte Funktionen einer Einstellvorrichtung auf Basis einer Blickrichtungsanalyse auszuwählen.

Die US 6 397 137 B1 beschreibt eine Funktionsauswahl für ein Bedienelement zur Einstellung eines Außenspiegels, sofern festgestellt wird, dass der Nutzer in die Richtung des Außenspiegels blickt.

Es ist Aufgabe der vorliegenden Erfindung, die aus dem Stand der Technik bekannten Systeme zur Einstellung der Anzeige von Head-up-Displays in (Kraft)Fahrzeugen in neuartiger und vorteilhafter Weise weiterzubilden. Diese Aufgabe wird gelöst durch das System gemäß Anspruch 1, das Verfahren gemäß Anspruch 3 sowie das Fahrzeug gemäß Anspruch 4. Vorteilhafte Weiterbildungen der Erfindung sind Gegenstand der Unteransprüche.

Dementsprechend wird ein erfindungsgemäßes System zum automatischen Ein-/Umschalten einer Einstellvorrichtung zum Einstellen einer horizontalen und/oder vertikalen Position eines Sichtfensters einer Head-up-Display-Einrichtung eines Fahrzeugs vorgeschlagen, umfassend
- eine Head-up-Display-Einrichtung, die dazu eingerichtet ist, eine Anzeige auf eine Projektionsfläche eines Fahrzeugs projizieren zu können, und
- eine mit der Head-up-Display-Einrichtung gekoppelte Einstellvorrichtung mit einer Bedieneinrichtung, die dazu eingerichtet ist, wenigstens die horizontale und/oder vertikale Position des Sichtfensters der Head-up-Display-Einrichtung durch eine Bedienhandlung an der Bedieneinrichtung einstellen zu können.
Das erfindungsgemäße System ist dadurch gekennzeichnet, dass es weiter
- eine Erfassungseinrichtung zur Erfassung und Auswertung einer Blickrichtung eines Nutzers der Head-up-Display-Einrichtung und
- eine mit der Einstellvorrichtung und der Erfassungseinrichtung gekoppelte Steuereinrichtung aufweist, wobei
die Steuereinrichtung dazu eingerichtet ist, die Einstellvorrichtung für ein Einstellen des horizontalen und/oder vertikalen Sichtfensters der Head-up-Display-Einrichtung des Fahrzeugs ein-/umzuschalten, sofern und solange von der Erfassungseinrichtung erkannt wird, dass der Nutzer in Richtung der Projektionsfläche blickt.
Durch das erfindungsgemäße System ergibt sich der Vorteil, dass ein Nutzer der Head-up-Display-Einrichtung zum Einstellen des horizontalen und/oder vertikalen Sichtfensters der Head-up-Display-Einrichtung nicht erst mechanisch eine Einstellvorrichtung aktivieren oder umschalten muss, sondern dass ein derartiges Einstellen ohne Weiteres von ihm mit Hilfe einer Bedienhandlung an der Bedieneinrichtung vorgenommen werden kann, sofern und solange er in Richtung der Projektionsfläche blickt.

Das erfindungsgemäße System ist weiter dadurch gekennzeichnet, dass die Einstellvorrichtung mit der Bedieneinrichtung weiter für ein Einstellen von wenigstens einem Außenspiegel und/oder einem Innenspiegel des Fahrzeugs eingerichtet ist. Durch diese Weiterbildung lässt sich die Anzahl an Bedienelementen für diverse fahrzeugseitige Einrichtungen in vorteilhafter Weise reduzieren.

Das erfindungsgemäße System ist weiter dadurch gekennzeichnet, dass die Steuereinrichtung weiter dazu eingerichtet ist,
- die Einstellvorrichtung für ein Einstellen eines Außenspiegels durch eine Bedienhandlung des Nutzers an der Bedieneinrichtung ein-/umzuschalten, sofern und solange von der Erfassungseinrichtung erkannt wird, dass der Nutzer in Richtung des Außenspiegels blickt, und/oder
- die Einstellvorrichtung für ein Einstellen eines Innenspiegels durch eine Bedienhandlung des Nutzers an der Bedieneinrichtung ein-/umzuschalten, sofern und solange von der Erfassungseinrichtung erkannt wird, dass der Nutzer in Richtung des Innenspiegels blickt.

Gemäß einer vorteilhaften Weiterbildung des Systems umfasst die Einstellvorrichtung wenigstens einen Joystick oder Drehschalter als Bedieneinrichtung.
Die vorliegende Erfindung betrifft auch ein Verfahren zum automatischen Ein-/Umschalten einer Einstellvorrichtung zum Einstellen einer horizontalen und/oder vertikalen Position eines Sichtfensters einer Head-up-Display-Einrichtung eines Fahrzeugs, unter Verwendung eines erfindungsgemäßen Systems oder eines seiner vorteilhaften Weiterbildungen.
Das erfindungsgemäße Verfahren umfasst die Schritte:
- Erfassen und Auswerten der Blickrichtung eines Nutzers der Head-up-Display-Einrichtung mit Hilfe der Erfassungseinrichtung; und
- Ein-/Umschalten der Einstellvorrichtung für ein Einstellen der horizontalen und/oder vertikalen Position des Sichtfensters der Head-up-Display-Einrichtung des Fahrzeugs, sofern und solange von der Erfassungseinrichtung erkannt wird, dass der Nutzer in Richtung der Projektionsfläche blickt, durch die Steuereinrichtung, sowie.
- Ein-/Umschalten der Einstellvorrichtung für ein Einstellen eines Außenspiegels, sofern und solange von der Erfassungseinrichtung erkannt wird, dass der Nutzer in Richtung des Außenspiegels blickt, durch die Steuereinrichtung, und/oder
- Ein-/Umschalten der Einstellvorrichtung für ein Einstellen eines Innenspiegels, sofern und solange von der Erfassungseinrichtung erkannt wird, dass der Nutzer in Richtung des Innenspiegels blickt, durch die Steuereinrichtung.
Die vorliegende Erfindung betrifft weiter auch ein Fahrzeug mit einem erfindungsgemäßen System oder einem seiner Weiterbildungen.
Gemäß einer vorteilhaften Weiterbildung des Fahrzeugs ist dieses dadurch gekennzeichnet, dass die Bedieneinrichtung der Einstellvorrichtung im Bereich der Fahrertür, der Lenkradhandhabe, des Armaturenbretts, der Mittelkonsole oder zwischen Fahrer- und Beifahrersitz angeordnet ist.
Die vorliegende Erfindung wird anhand der beigefügten Zeichnung näher erläutert.
Die Figur zeigt schematisch ein Beispiel eines erfindungsgemäßen Systems.
Die Darstellungen in der Figur sind rein schematisch und nicht maßstabsgerecht.
Die nachfolgend erläuterten Ausführungsbeispiele stellen bevorzugte Ausführungsformen der vorliegenden Erfindung dar. Die vorliegende Erfindung ist selbstverständlich nicht auf diese Ausführungsformen beschränkt.
Wie in der Figur schematisch dargestellt ist, umfasst das erfindungsgemäße System zum automatischen Ein-/Umschalten einer Einstellvorrichtung zum Einstellen einer horizontalen und/oder vertikalen Position eines Sichtfensters einer Head-up-Display-Einrichtung eines Fahrzeugs
- eine Head-up-Display-Einrichtung 1, die dazu eingerichtet ist, eine Anzeige auf eine Projektionsfläche 2 eines Fahrzeugs projizieren zu können, und eine mit der Head-up-Display-Einrichtung 1 gekoppelte Einstellvorrichtung 3 mit einer Bedieneinrichtung 4, die dazu eingerichtet ist, wenigstens die horizontale und/oder vertikale Position des Sichtfensters der Head-up-Display-Einrichtung 1 durch eine Bedienhandlung an der Bedieneinrichtung 4 einstellen zu können.

Das erfindungsgemäße System ist dadurch gekennzeichnet, dass es weiter eine Erfassungseinrichtung 5 zur Erfassung und Auswertung einer Blickrichtung eines Nutzers der Head-up-Display-Einrichtung 1 und eine mit der Einstellvorrichtung 3 und der Erfassungseinrichtung 5 gekoppelte Steuereinrichtung 6 aufweist, wobei die Steuereinrichtung 6 dazu eingerichtet ist, die Einstellvorrichtung 3 für ein Einstellen des horizontalen und/oder vertikalen Sichtfensters der Head-up-Display-Einrichtung 1 des Fahrzeugs 7 ein-/umzuschalten, sofern und solange von der Erfassungseinrichtung 5 erkannt wird, dass der Nutzer in Richtung der Projektionsfläche 2 blickt.

Bei Head-up-Display-Einrichtungen 1 wird bekanntermaßen Licht einer Lichtquelle, bspw. einer lichtemittierende Diode, durch eine Lichtlenk-Optik auf eine Bilderzeugungseinrichtung, wie bspw. ein Flüssigkristall-Display, gelenkt, und das derart erzeugte Bild mittels einer Abbildungseinrichtung auf eine spiegelnde, lichtdurchlässige Projektionsfläche 2 des Fahrzeuges projiziert, die auch in Form eines "Combiner" ausgebildet sein kann.

Mittels der Projektionsfläche 2 wird das Licht der Head-up-Display-Einrichtung 1 in die Augen des Nutzers (Fahrers) reflektiert. Da die Projektionsfläche 2 bei einem Fahrzeug 7 in der Regel vor dem Nutzer (Fahrer) positioniert ist (Windschutzscheibe) und sich teilweise über seinen Blickbereich in den Umgebungsbereich des Fahrzeugs 7 erstreckt, kann ein Fahrer gleichzeitig den Umgebungsbereich des Fahrzeugs 7 und von der Head-up-Display-Einrichtung 1 zur Verfügung gestellte Informationen betrachten. Hierbei muss ein Fahrer den Fokus seiner Augen nicht verändern, da das Bild der Head-up-Display-Einrichtung 1 in die Unendlichkeit projiziert wird.

Mittels Head-up-Display-Einrichtungen 1 können grundsätzlich alle möglichen Informationen (in Form von virtuellen Bildern) angezeigt werden, bspw. ein Betriebszustand des Fahrzeugs 7, die Fahrzeuggeschwindigkeit, Navigationsanweisungen, Warnhinweise, etc. Moderne Head-up-Display-Einrichtungen 1 sind in der Lage, Informationen in einer lagerichtigen, d.h. positionsrichtigen und perspektivisch richtigen Weise in das Sichtfeld eines Nutzers einzublenden.

Wie oben bereits erwähnt, ist insbesondere aufgrund des (Kraft)Fahrzeugen zur Verfügung stehenden Bauraums für die Head-up-Display-Einrichtung 1 das Sichtfenster ("eye box" bzw. "head box"), innerhalb der die durch die Head-up-Display-Einrichtung 1 angezeigten Informationen für einen Nutzer sichtbar sind, relativ klein, so dass es wünschenswert oder sogar erforderlich ist, das Sichtfenster der Head-up-Display-Einrichtung 1 für verschiedene Nutzer in horizontaler und vertikaler Richtung verstellen zu können.

Eine der hierfür an sich bekannten Lösungen sieht vor, eine Einstellvorrichtung mit einer Bedieneinrichtung vorzusehen, wobei durch Bedienhandlungen an der Bedieneinrichtung das Sichtfenster der Head-up-Display-Einrichtung ein- bzw. verstellt werden kann. Vor der Vornahme einer Ein-bzw. Verstellung des Sichtfensters der Head-up-Display-Einrichtung ist es jedoch oftmals erforderlich, dass der Nutzer die Einstellvorrichtung durch eine erste Bedienhandlung an der Bedieneinrichtung von einem Aus-Zustand (bspw. Neutralstellung der Bedieneinrichtung) in einen eingeschalteten Zustand versetzt.

Dieser Nachteil wird durch das erfindungsgemäße System überwunden.

Das erfindungsgemäße System weist eine Erfassungseinrichtung 5 zur Erfassung und Auswertung einer Blickrichtung eines Nutzers der Head-up-Display-Einrichtung 1 auf. Derartige Erfassungseinrichtungen 5 sind aus dem Stand der Technik bekannt.

Für eine Verwendung in (Kraft)Fahrzeugen sind in aller Regel externe Systeme vorteilhaft, die die Durchführung berührungsloser Messungen ermöglichen. Bei diesen Systemen kommt grundsätzlich immer wenigstens eine Kameraeinrichtung zum Einsatz, mit deren Hilfe ein Auge innerhalb eines Gesichts erkannt und die Bewegung des Auges verfolgt wird.

Es sind verschiedene Techniken bekannt, die für Einrichtungen zur Erfassung und Auswertung einer Blickrichtung eines Nutzers verwendet werden können. Bei "Pan-Tilt"-Systemen führen mechanisch bewegliche Komponenten die Kamera mit Kameraoptik den Kopfbewegungen eines Nutzers nach. Bei "Tilting-Mirror"-Systemen sind Kamera und Optik raumfest verbaut und ermöglichen servogetriebene Spiegel ein Nachverfolgen des Auges bei Kopfbewegungen. Bei "Fixed-Camera"-Systemen wird auf mechanisch bewegliche Komponenten verzichtet und werden die von der/den Kameraeinrichtung(en) erfasste Bilder mittels Bildverarbeitung ausgewertet.

Da die Erfassungseinrichtung 5 zur Erfassung und Auswertung einer Blickrichtung eines Nutzers an einem bekannten Ort innerhalb des (Kraft)Fahrzeugs 7 ortsfest verbaut ist, kann über die Position von wenigstens einem Auge des Nutzers (Fahrers) und der ermittelten Blickrichtung zumindest mit der erforderlichen Genauigkeit festgestellt werden, auf welche Stelle im Innenraum des Fahrzeugs der Nutzer (Fahrer) gerade blickt.

Die Position und Größe der Projektionsfläche 2, innerhalb der das (virtuelle) Bild der Head-up-Display-Einrichtung 1 projiziert werden kann, ist bei einem (Kraft)Fahrzeug 7 ebenfalls fest vorgegeben.

Mittels der Blickrichtung des Nutzers (Fahrers), die in geeigneten Zeitabständen (bspw. 1x/s, 2x/s, 3x/s, 4x/s, 5x/s, 8x/s, 10x/s, 15x/s, 20x/s, 25x/s, 30x/s; x = Mal, s = Sekunde) wiederholt ermittelt werden kann, und der bekannten Position und Größe der Projektionsfläche 2 kann somit auf einfache Weise (z.B. unter Verwendung der Winkel zwischen der Erfassungsachse der Erfassungseinrichtung 5 und der Blickrichtung des Nutzers) festgestellt werden, ob ein Nutzer (Fahrer) in Richtung der Projektionsfläche 2 blickt oder nicht.

Wenn und solange der Fahrer in Richtung der Projektionsfläche 2 blickt, wird mittels der Steuereinrichtung 6 die Einstellvorrichtung 3 für ein Einstellen des horizontalen und/oder vertikalen Sichtfensters der Head-up-Display-Einrichtung 1 des Fahrzeugs 7 ein- bzw. umgeschaltet. Die hierfür erforderliche Daten empfängt die Steuereinrichtung 6 von der Erfassungseinrichtung 5 oder fragt die Steuereinrichtung 6 von der Erfassungseinrichtung 5 ab (in geeigneten Zeitabständen).

Bei der Steuereinrichtung 6 kann es sich um jede handeln, mit Hilfe derer die Einstellvorrichtung 3 ein-, um- und gegebenenfalls auch ausgeschaltet werden kann. Die Steuereinrichtung 6 kann bspw. ein Bestandteil einer digitalen Recheneinrichtung sein, die heute bereits in vielen modernen (Kraft)Fahrzeugen vorhanden ist, oder aber auch eine hiervon getrennte Baugruppe oder Bauteil. Die Steuereinrichtung 6 kann dazu eingerichtet sein, mit der Einstellvorrichtung 3 und der Erfassungseinrichtung 5 drahtgebunden oder drahtlos zu kommunizieren. Die Steuereinrichtung 6, die Einstellvorrichtung 3 und die Erfassungseinrichtung 5 können bspw. mit einem fahrzeugseitigen Bussystem (bspw. CAN-Bus) gekoppelt sein, bzw. über ein fahrzeugseitiges Bussystem kommunizieren.
Bei der Einstellvorrichtung 3 kann es sich um jede geeignete Vorrichtung handeln, mit der die horizontale und/oder vertikale Position des Sichtfensters der Head-up-Display-Einrichtung 1 eingestellt werden kann, bspw. um eine Einstellvorrichtung 3 mit elektromotorisch angetriebenen Gewindestangen, Zahnrädern, Zahnstangen und/oder (Schritt)Motoren, mit denen die Ausrichtung der Head-up-Display-Einrichtung 1 bzw. die Projektionsrichtung der Abbildungseinrichtung auf die spiegelnde, lichtdurchlässige Projektionsfläche 2 relativ zum Fahrzeug 7 zumindest entlang von zwei Richtungsachsen ein- bzw. verstellt werden kann.
Bei dem erfindungsgemäßen System ist die Steuereinrichtung 6 dazu eingerichtet, die Einstellvorrichtung 3 für ein Einstellen des horizontalen und/oder vertikalen Sichtfensters der Head-up-Display-Einrichtung 1 des Fahrzeugs 7 ein-/umzuschalten, sofern und solange von der Erfassungseinrichtung 5 erkannt wird, dass der Nutzer in Richtung der Projektionsfläche 2 blickt.
Somit kann ein Nutzer (Fahrer) eines (Kraft)Fahrzeugs eine Einstellung des Sichtfensters der Head-up-Display-Einrichtung 1 durch eine Bedienhandlung an der Bedieneinrichtung 4 vornehmen, ohne dass er diese zuerst von einem Aus-Zustand (bspw. Neutralstellung der Bedieneinrichtung) in einen eingeschalteten Zustand versetzen muss. Vielmehr reicht es aus, dass er in Richtung der Projektionsfläche 2 blickt, wenn er die Bedienhandlung an der Bedieneinrichtung 4 vornimmt.

Die Einstellvorrichtung 3 ist mit der Bedieneinrichtung 4 weiter wenigstens für ein Einstellen von wenigstens einem Außenspiegel 8 und/oder einem Innenspiegel 9 des Fahrzeugs eingerichtet. Hierfür wird die Einstellvorrichtung 3 durch die Steuereinrichtung 6 automatisch zur Einstellung der horizontalen und/oder vertikalen Position des Sichtfensters der Head-up-Display-Einrichtung 1 durch eine Bedienhandlung an der Bedieneinrichtung ein- bzw. umgeschaltet, sofern und solange von der Erfassungseinrichtung 5 erkannt wird, dass der Nutzer in Richtung der Projektionsfläche 2 blickt.

Dadurch ergibt sich somit der Vorteil, dass zum einen die Anzahl an Bedienelementen für verschiedene fahrzeugseitige Einrichtungen verringert werden kann, gleichzeitig jedoch die Vorteile des erfindungsgemäßen Systems erhalten bleiben.

Weitere Vorteile ergeben sich dadurch, dass die Steuereinrichtung 6 weiter dazu eingerichtet ist,
- die Einstellvorrichtung 3 für ein Einstellen eines Außenspiegels 8 durch eine Bedienhandlung des Nutzers an der Bedieneinrichtung 4 ein-/umzuschalten, sofern und solange von der Erfassungseinrichtung 5 erkannt wird, dass der Nutzer in Richtung des Außenspiegels 8 blickt, und/oder
- die Einstellvorrichtung 3 für ein Einstellen eines Innenspiegels 9 durch eine Bedienhandlung des Nutzers an der Bedieneinrichtung 4 ein-/umzuschalten, sofern und solange von der Erfassungseinrichtung 5 erkannt wird, dass der Nutzer in Richtung des Innenspiegels 9 blickt.
Die Funktionalität der Einstellvorrichtung zur Einstellung der Head-up-Display-Einrichtung 1 ist hierbei mit einer Funktionalität zur Einstellung von wenigstens einer weiteren fahrzeugseitigen Einrichtung, wie bspw. zur Einstellung eines Außenspiegels 8 und/oder des Innenspiegels 9 kombiniert.
Allein durch die Erfassung und Auswertung der Blickrichtung des Nutzers wird die Einstellvorrichtung 3 für eine Einstellung an derjenigen fahrzeugseitigen Einrichtung "aktiviert", d.h. ein- oder umgeschaltet, zu der ein Nutzer gerade blickt. Somit ist eine Einstellung auch bei mehreren verschiedenen fahrzeugseitigen Einrichtungen mit Hilfe von nur einer Bedieneinrichtung 4 möglich, ohne dass der Nutzer irgendeine mechanische Umschaltung (Funktionsauswahl) bei dieser oder einer davon getrennten Bedieneinrichtung vornehmen muss.
Die Einstellvorrichtung 3 kann als Bedieneinrichtung 4 alle geeigneten Einrichtungen umfassen. In bevorzugter Weise umfasst die Einstellvorrichtung 3 jedoch wenigstens einen Joystick oder Drehschalter als Bedieneinrichtung 4. Derartige Einrichtungen sind aus dem Stand der Technik an sich bekannt.
Bspw. kann mit Hilfe einer Bewegung eines Joystick nach links oder rechts die horizontale Position des Sichtfensters der Head-up-Display-Einrichtung 1 und mit Hilfe einer Bewegung des Joystick nach oben oder unten bzw. nach vorne oder zurück die vertikale Position des Sichtfensters der Head-up-Display-Einrichtung 1 eingestellt werden. In entsprechender Weise kann die Ausrichtung der Spiegelelemente von Außenspiegel(n) 8 und Innenspiegel 9 eingestellt werden.
Bei einem Drehschalter kann gemäß der vorliegenden Erfindung vorgesehen sein, dass durch ein Verschieben bzw. Verkippen der Bedienebene entlang einer ersten Richtungsachse das Sichtfensters der Head-up-Display-Einrichtung nach oben oder unten, und durch ein Verschieben bzw. Verkippen der Bedienebene entlang einer zweiten Richtungsachse, die senkrecht zu der ersten Richtungsachse ausgerichtet ist, das Sichtfensters der Head-up-Display-Einrichtung nach links oder rechts verschoben werden kann.
Durch ein Verdrehen des Drehschalters kann weiter vorgesehen sein, dass hierdurch ein oder mehrere andere fahrzeugseitige Einrichtungen angewählt werden können, bspw. Spiegelheizung, Anklappen der Außenspiegel, etc.
Die vorliegende Erfindung umfasst auch ein Verfahren zum automatischen Ein-/Umschalten einer Einstellvorrichtung 3 zum Einstellen einer horizontalen und/oder vertikalen Position eines Sichtfensters einer Head-up-Display-Einrichtung 1 eines Fahrzeugs 7, unter Verwendung eines Systems gemäß einem der Ansprüche 1 bis 2. Das erfindungsgemäße Verfahren umfasst die Schritte:
- Erfassen und Auswerten der Blickrichtung eines Nutzers der Head-up-Display-Einrichtung 1 mit Hilfe der Erfassungseinrichtung 5; und
- Ein-/Umschalten der Einstellvorrichtung 3 für ein Einstellen der horizontalen und/oder vertikalen Position des Sichtfensters der Head-up-Display-Einrichtung 1 des Fahrzeugs 7, sofern und solange von der Erfassungseinrichtung 5 erkannt wird, dass der Nutzer in Richtung der Projektionsfläche 2 blickt, durch die Steuereinrichtung 6,
- Ein-/Umschalten der Einstellvorrichtung 3 für ein Einstellen eines Außenspiegels 8, sofern und solange von der Erfassungseinrichtung 5 erkannt wird, dass der Nutzer in Richtung des Außenspiegels 8 blickt, durch die Steuereinrichtung 6, und/oder
- Ein-/Umschalten der Einstellvorrichtung 3 für ein Einstellen eines Innenspiegels 9, sofern und solange von der Erfassungseinrichtung 5 erkannt wird, dass der Nutzer in Richtung des Innenspiegels 9 blickt, durch die Steuereinrichtung 6.
Die vorliegende Erfindung umfasst auch ein Fahrzeug 7 mit einem System gemäß einem der Ansprüche 1 bis 2.

Dieses Fahrzeug 7 kann in vorteilhafter Weise dahin weitergebildet sein, dass die Bedieneinrichtung 4 der Einstellvorrichtung 3 im Bereich der Fahrertür, der Lenkradhandhabe, des Armaturenbretts, der Mittelkonsole oder zwischen Fahrer- und Beifahrersitz angeordnet ist.
Sofern in der vorliegenden Anmeldung der Ausdruck "solange" (von der Erfassungseinrichtung 5 erkannt wird, dass der Nutzer in eine bestimmte Richtung blickt) verwendet wird, ist damit auch ein kurzer Zeitraum von bspw. 0,2 s, 0,5 s, 1 s, 1,5 s, 2 s (s=Sekunde) umfasst, während dessen der Nutzer nicht mehr in die bestimmte Richtung blickt, bspw. weil er kurz durch ein Ereignis abgelenkt worden ist oder auf die Bedieneinrichtung 4 blickt. Auch während dieses kurzen Zeitraums kann erfindungsgemäß die Einstellvorrichtung 3 weiterhin für ein Einstellen der fahrzeugseitigen Einrichtung eingeschaltet bleiben, in deren Richtung der Nutzer davor geblickt hat. Hierdurch wird der Vorgang einer Einstellung der fahrzeugseitigen Einrichtung bei einer Bedienhandlung an der Bedieneinrichtung 4 durch den Nutzer nicht unterbrochen bzw. kann ein Nutzer eine Einstellung bei der fahrzeugseitigen Einrichtung durch eine Bedienhandlung an der Bedieneinrichtung 4 beginnen, auch wenn der Nutzer kurzzeitig nicht in Richtung der entsprechenden fahrzeugseitigen Einrichtung blickt.
Bei einer Einstellung des Sichtfensters der Head-up-Display-Einrichtung 1 durch Einstellen des (virtuellen) Bildes der Head-up-Display-Einrichtung 1 in vertikaler Richtung auf der Projektionsfläche 2 kann ebenfalls vorgesehen sein, dass eine vorgegebene, automatische Rotation der Bilderzeugungseinrichtung in Abhängigkeit von der Verstellung der Abbildungseinrichtung bewirkt wird. Hierdurch können Toleranzen beim Einbau des Head-up-Display, Toleranzen beim Einbau der Windschutzscheibe und/oder Krümmungen der Windschutzscheibe ausgeglichen werden, die eine "Verzerrung" (bspw. ein "Herunterhängen") einer darzustellenden Abbildung bei einer Höhenverstellung des erzeugten Bildes verursachen.

Da einem Fachmann die für das erfindungsgemäße System sowie seine Weiterbildungen, Ausführungsformen, Ausführungsbeispiele möglichen Komponenten (Baugruppen, Bauteile, Elemente, Hard- und Software-Komponenten, etc.) sowie deren mögliches Zusammenwirken bekannt sind, braucht in der vorliegenden Anmeldung nicht näher darauf eingegangen zu werden.

Durch die vorliegende Erfindung wird ein Einstellen einer Head-up-Display-Einrichtung 1 mit Hilfe einer Bedieneinrichtung 4 einer Einstelleinrichtung 3 ohne mechanische Umschaltung (Funktionsauswahl) zur Verfügung gestellt. Der Nutzer (Fahrer) kann die Head-up-Display-Einrichtung 1 ein-/verstellen, indem er auf die Projektionsfläche 2 der Head-up-Display-Einrichtung 1 sieht und die Bedieneinrichtung 4 betätigt, die automatisch mittels der Steuereinrichtung 6 für eine Einstellung/Verstellung des Sichtfensters der Head-up-Display-Einrichtung 1 ein-/umgeschaltet wird, wenn und solange von der Erfassungseinrichtung 5 zur Erfassung und Auswertung einer Blickrichtung des Nutzers erkannt wird, dass der Nutzer in Richtung der Projektionsfläche 2 blickt.

## Patentansprüche

1. System zum automatischen Ein-/Umschalten einer Einstellvorrichtung zum Einstellen einer horizontalen und/oder vertikalen Position eines Sichtfensters einer Head-up-Display-Einrichtung eines Fahrzeugs, umfassend
- eine Head-up-Display-Einrichtung (1), die dazu eingerichtet ist, eine Anzeige auf eine Projektionsfläche (2) eines Fahrzeugs projizieren zu können, und
- eine mit der Head-up-Display-Einrichtung (1) gekoppelte Einstellvorrichtung (3) mit einer Bedieneinrichtung (4), die dazu eingerichtet ist, die horizontale und/oder vertikale Position des Sichtfensters der Head-up-Display-Einrichtung (1) durch eine Bedienhandlung an der Bedieneinrichtung (4) einstellen zu können, wobei die Einstellvorrichtung (3) mit der Bedieneinrichtung (4) weiter für ein Einstellen von wenigstens einem Außenspiegel (8) und/oder einem Innenspiegel (9) des Fahrzeugs (7) eingerichtet ist **dadurch gekennzeichnet, dass** das System weiter
- eine Erfassungseinrichtung (5) zur Erfassung und Auswertung einer Blickrichtung eines Nutzers der Head-up-Display-Einrichtung (1) und
- eine mit der Einstellvorrichtung (3) und der Erfassungseinrichtung (5) gekoppelte Steuereinrichtung (6) aufweist, wobei
- die Steuereinrichtung (6) dazu eingerichtet ist,
- die Einstellvorrichtung (3) für ein Einstellen des horizontalen und/oder vertikalen Sichtfensters der Head-up-Display-Einrichtung (1) des Fahrzeugs (7) ein-/umzuschalten, sofern und solange von der Erfassungseinrichtung (5) erkannt wird, dass der Nutzer in Richtung der Projektionsfläche (2) blickt, und
- - die Einstellvorrichtung (3) für ein Einstellen eines Außenspiegels (8) durch eine Bedienhandlung des Nutzers an der Bedieneinrichtung (4) ein-/umzuschalten, sofern und solange von der Erfassungseinrichtung (5) erkannt wird, dass der Nutzer in Richtung des Außenspiegels (8) blickt, und/oder
- - die Einstellvorrichtung (3) für ein Einstellen eines Innenspiegels (9) durch eine Bedienhandlung des Nutzers an der Bedieneinrichtung (4) ein-/umzuschalten, sofern und solange von der Erfassungseinrichtung (5) erkannt wird, dass der Nutzer in Richtung des Innenspiegels (9) blickt.

2. System gemäß Anspruch 1,
**dadurch gekennzeichnet, dass**
die Einstellvorrichtung (3) wenigstens einen Joystick oder Drehschalter als Bedieneinrichtung (4) umfasst.

3. Verfahren zum automatischen Ein-/Umschalten einer Einstellvorrichtung (3) zum Einstellen einer horizontalen und/oder vertikalen Position eines Sichtfensters einer Head-up-Display-Einrichtung (1) eines Fahrzeugs (7), unter Verwendung eines Systems gemäß einem der Ansprüche 1 oder 2, mit den Schritten:
- Erfassen und Auswerten der Blickrichtung eines Nutzers der Head-up-Display-Einrichtung (1) mit Hilfe der Erfassungseinrichtung (5); sowie
- Ein-/Umschalten der Einstellvorrichtung (3) für ein Einstellen der horizontalen und/oder vertikalen Position des Sichtfensters der Head-up-Display-Einrichtung (1) des Fahrzeugs (7), sofern und solange von der Erfassungseinrichtung (5) erkannt wird, dass der Nutzer in Richtung der Projektionsfläche (2) blickt, durch die Steuereinrichtung (6), und
- - Ein-/Umschalten der Einstellvorrichtung (3) für ein Einstellen eines Außenspiegels (8), sofern und solange von der Erfassungseinrichtung (5) erkannt wird, dass der Nutzer in Richtung des Außenspiegels (8) blickt, durch die Steuereinrichtung (6), und/oder
- - Ein-/Umschalten der Einstellvorrichtung (3) für ein Einstellen eines Innenspiegels (9), sofern und solange von der Erfassungseinrichtung (5) erkannt wird, dass der Nutzer in Richtung des Innenspiegels (9) blickt, durch die Steuereinrichtung (6).

4. Fahrzeug (7) mit einem System gemäß einem der Ansprüche 1 oder 2.

5. Fahrzeug (7) gemäß Anspruch 4,
**dadurch gekennzeichnet, dass**
die Bedieneinrichtung (4) der Einstellvorrichtung (3) im Bereich der Fahrertür, der Lenkradhandhabe, des Armaturenbretts, der Mittelkonsole oder zwischen Fahrer- und Beifahrersitz angeordnet ist.

## Claims

1. System for automatic switching on or adjusting of an adjustment device for adjusting a horizontal and/or vertical position of a view window of a head-up-display apparatus of a vehicle, comprising
- a head-up-display apparatus (1) which is designed to be able to project a display on a projection surface (2) of a vehicle, and
- an adjustment device (3) coupled with the head-up-display apparatus (1) with an operating apparatus (4) which is adapted to be able to adjust the horizontal and/or vertical position of the view window of the head-up-display apparatus (1) by means of an operating action at the operating apparatus (4), wherein the adjustment device (3) with the operating device (4) is further adjusted for adjusting at least one external mirror (8) and/or an interior mirror (9) of the vehicle (7)
**characterised in that** the system further
- has a detecting apparatus (5) for detecting and evaluating a viewing direction of a user of the head-up-display apparatus (1) and
- has a control apparatus (6) coupled with the adjustment device (3) and the detecting apparatus (5), wherein
- the control device (6) is designed,
- to switch on/adjust the adjustment device (3) for adjusting the horizontal and/or vertical view window of the head-up-display apparatus (1) of the vehicle (7), inasmuch as and as long as it is recognised by the detecting apparatus (5) that the user is looking in the direction of the projection surface (2), and
- - to switch on/adjust the adjustment device (3) for adjusting an external mirror (8) by means of an operating action of the user at the operating apparatus (4), inasmuch as and as long as it is recognised by the detecting apparatus (5) that the user is looking in the direction of the external mirror (8), and/or
- - to switch on/adjust the adjustment device (3) for adjusting an interior mirror (9) by means of an operating action of the user of the operating apparatus (4), inasmuch as and as long as it is recognised by the detecting apparatus (5) that the user is looking in the direction of the interior mirror (9).

2. System according to claim 1,
**characterised in that**
the adjustment device (3) comprises at least one joystick or turn switch as operating apparatus (4).

3. Method for the automatic switching on/adjusting of an adjustment device (3) for adjusting a horizontal or vertical position of a view window of a head-up-display apparatus (1) of a vehicle (7), using a system according to one of claims 1 or 2,
with the steps
- detecting and evaluating the view direction of a user of the head-up-display apparatus (1) with the assistance of the detecting apparatus (5); and
- switching on/adjusting the adjustment device (3) on the part of the control apparatus (6) for adjusting the horizontal and/or vertical position of the view window of the head-up-display apparatus (1) of the vehicle (7), inasmuch as and as long as it is recognised by the detecting apparatus (5) that the user is looking in the direction of the projection surface (2), and
- - switching on/adjusting the adjustment device (3) on the part of the control apparatus (6) for an adjustment of an external mirror (8), inasmuch as and as long as it is recognised by the detecting apparatus (5) that the user is looking in the direction of the external mirror (8), and/or
- - switching on/adjusting the adjustment device (3) on the part of the control apparatus (6) for an adjustment of an interior mirror (9), inasmuch as and as long as it is recognised by the detecting apparatus (5) that the user is looking in the direction of the interior mirror (9).

4. Vehicle (7) with a system according to one of claims 1 or 2.

5. Vehicle (7) according to claim 4
**characterised in that**
the operating apparatus (4) of the adjustment device (3) is disposed in the region of the driver's door, the steering wheel grip, the control panel, the central console or between the driver's seat and the passenger's seat.

## Revendications

1. Système servant à mettre en service/commuter un dispositif de réglage servant à régler une position horizontale et/ou verticale d'une fenêtre d'inspection d'un dispositif d'affichage tête haute d'un véhicule, comprenant
- un dispositif d'affichage tête haute (1), qui est mis au point pour pouvoir projeter un affichage sur une surface de projection (2) d'un véhicule, et
- un dispositif de réglage (3) couplé au dispositif d'affichage tête haute (1) avec un dispositif d'utilisation (4), qui est mis au point pour pouvoir régler la position horizontale et/ou verticale de la fenêtre d'inspection du dispositif d'affichage tête haute (1) par une action d'utilisation sur le dispositif d'utilisation (4), dans lequel le dispositif de réglage (3) avec le dispositif d'utilisation (4) est par ailleurs mis au point pour un réglage d'au moins un rétroviseur extérieur (8) et/ou d'un rétroviseur intérieur (9) du véhicule (7), **caractérisé en ce que** le système présente par ailleurs
- un dispositif de détection (5) servant à détecter et à analyser une direction de regard d'un utilisateur du dispositif d'affichage tête haute (1) et
- un dispositif de commande (6) couplé au dispositif de réglage (3) et au dispositif de détection (5), dans lequel
- le dispositif de commande (6) est mis au point pour
- mettre en service/commuter le dispositif de réglage (3) pour un réglage de la fenêtre d'inspection horizontale et/ou verticale du dispositif d'affichage tête haute (1) du véhicule (7) tant et jusqu'à ce soit identifié par le dispositif de détection (5) que l'utilisateur regarde en direction de la surface de projection (2),
et
- - mettre en service/commuter le dispositif de réglage (3) pour un réglage d'un rétroviseur extérieur (8) par une action d'utilisation de l'utilisateur sur le dispositif d'utilisation (4) tant et jusqu'à ce soit identifié par le dispositif de détection (5) que l'utilisateur regarde en direction du rétroviseur extérieur (8), et/ou
- - mettre en service/commuter le dispositif de réglage (3) pour un réglage d'un rétroviseur intérieur (9) par une action d'utilisation de l'utilisateur sur le dispositif d'utilisation (4) tant et jusqu'à ce soit identifié par le dispositif de détection (5) que l'utilisateur regarde en direction du rétroviseur intérieur (9).

2. Système selon la revendication 1,
**caractérisé en ce que**
le dispositif de réglage (3) comprend au moins une manette ou un commutateur rotatif en tant que dispositif d'utilisation (4).

3. Procédé servant à mettre en service/commuter de manière automatique un dispositif de réglage (3) servant à régler une position horizontale et/ou verticale d'une fenêtre d'inspection d'un dispositif d'affichage tête haute (1) d'un véhicule (7), en utilisant un système selon l'une quelconque des revendications 1 ou 2, avec les étapes :
- de détection et d'analyse de la direction de regard d'un utilisateur du dispositif d'affichage tête haute (1) à l'aide du dispositif de détection (5) ; ainsi que
- de mise en service/commutation du dispositif de réglage (3) pour un réglage de la position horizontale et/ou verticale de la fenêtre d'inspection du dispositif d'affichage tête haute (1) du véhicule (7) tant et jusqu'à ce soit identifié par le dispositif de détection (5) que l'utilisateur regarde en direction de la surface de projection (2), par le dispositif de commande (6), et
- - de mise en service/commutation du dispositif de réglage (3) pour un réglage d'un rétroviseur extérieur (8) tant et jusqu'à ce que soit identifié par le dispositif de détection (5) que l'utilisateur regarde en direction du rétroviseur extérieur (8), par le dispositif de commande (6) et/ou
- - de mise en service/commutation du dispositif de réglage (3) pour un réglage d'un rétroviseur intérieur (9) tant et jusqu'à ce que soit identifié par le dispositif de détection (5) que l'utilisateur regarde en direction du rétroviseur intérieur (9), par le dispositif de commande (6).

4. Véhicule (7) avec un système selon l'une quelconque des revendications 1 ou 2.

5. Véhicule (7) selon la revendication 4,
**caractérisé en ce que**
le dispositif d'utilisation (4) du dispositif de réglage (3) est disposé dans la zone de la portière de véhicule, de la poignée de volant de direction, du tableau de bord, de la console centrale ou entre le siège conducteur et le siège passager.
